# EUROPEAN PATENT APPLICATION

(11) **EP 4 398 390 A1**
(43) Date of publication of application: **10.07.2024**
(21) Application number: 23824095.6
(22) Date of filing: 11.05.2023
(51) Int. Cl.: H01M 50/204, H01M 50/22

(54) **FRAME INCLUDING GUIDELINE, AND BATTERY MODULE INCLUDING FRAME**

(30) Priority: 16.06.2022 KR 20220073815; 11.04.2023 KR 20230047764
(71) Applicant: LG Energy Solution, Ltd., Seoul 07335 (KR)
(72) Inventor: LEE, Hyun Jae, Daejeon 34122 (KR)
(74) Representative: Plasseraud IP
(86) International application number: PCT/KR2023/006440
(87) International publication number: WO 2023/243869

(57) **Abstract**

A frame includes a first guideline provided to guide attachment of an insulating sheet, and a second guideline provided to have a second length different from a first length of the first guideline at a height different from that of the first guideline.

## Description

### TECHNICAL FIELD

### CROSS-REFERENCE TO RELATED APPLICATION

The present application claims the benefit of the priority of Korean Patent Application Nos. 10-2022-0073815, filed on June 16, 2022, 10-2023-0047764, filed on April 11, 2023, which are hereby incorporated by reference in their entirety.

### TECHNICAL FIELD

The present invention relates to a frame including a guideline and a battery module including the frame.

### BACKGROUND ART

In order to solve the problem of environmental pollution and solve demands for alternative energy sources due to the depletion of petroleum resources, research and development on power generation based on Eco-friendly energy sources are being conducted. Particularly, researches on secondary batteries capable of being repeatedly chargeable/dischargeable are being actively conducted, and research/development on various aspects such as materials, structures, processes, and stability of secondary batteries are being conducted.

A secondary battery system may form a battery module through series/parallel arrangement of a plurality of secondary batteries. In addition, a plurality of battery modules may be coupled to form a battery pack.

A plurality of secondary batteries provided inside the battery module may need to be insulated from other components other than electrical connection to the outside through a connection member. Particularly, since one of the frames is made of a material such as aluminum having high electrical conductivity, the need for insulation may increase.

### DISCLOSURE OF THE INVENTION

### TECHNICAL PROBLEM

An object of the present invention for solving the above problem is to provide a frame, on which an insulating member is quickly and effectively attached by providing a guideline, and a battery module.

However, the technical problem to be solved by the present invention is not limited to the above problem, and other problems not mentioned will be clearly understood by those skilled in the art from the description of the invention described below.

### TECHNICAL SOLUTION

A frame according to an embodiment of the present invention includes a first guideline provided to guide attachment of an insulating sheet, and a second guideline provided to have a second length different from a first length of the first guideline at a height different from that of the first guideline.

A battery module according to an embodiment of the present invention includes a secondary battery, and a frame configured to accommodate the secondary battery and define an outer periphery, wherein the frame includes a first guideline provided to guide attachment of an insulating sheet, and a second guideline provided to have a second length different from a first length of the first guideline at a height different from that of the first guideline.

### ADVANTAGEOUS EFFECTS

According to the preferred embodiment of the present invention, the insulating member may be quickly and effectively attached.

According to the preferred embodiment of the present invention, the insulating member may be attached to the preset position to improve the insulation performance.

### BRIEF DESCRIPTION OF THE DRAWINGS

FIG. 1a is a perspective view of a battery module according to an embodiment of the present invention.
FIG. 1b is a perspective view of a frame according to an embodiment of the present invention.
FIG. 2 is an enlarged view of guidelines according to an embodiment of the present invention.
FIG. 3 is an enlarged view illustrating a state in which an insulating sheet is attached based on guidelines according to an embodiment of the present invention.
FIG. 4 is an enlarged view illustrating guidelines and a state in which an insulating sheet is attached to the guidelines according to another embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

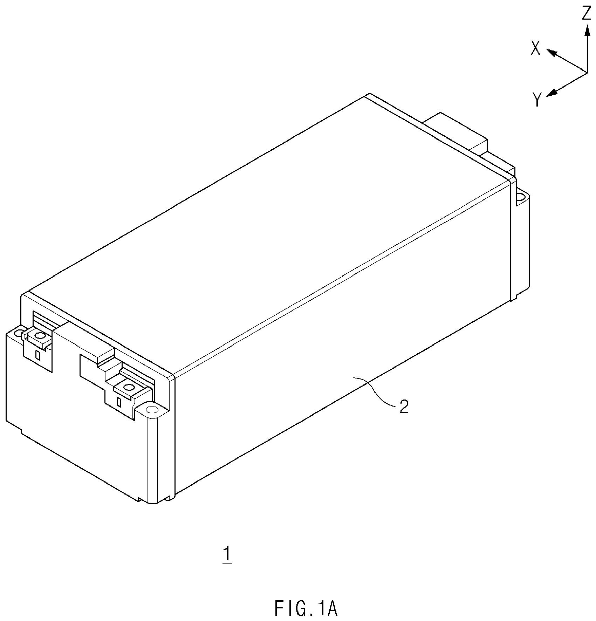

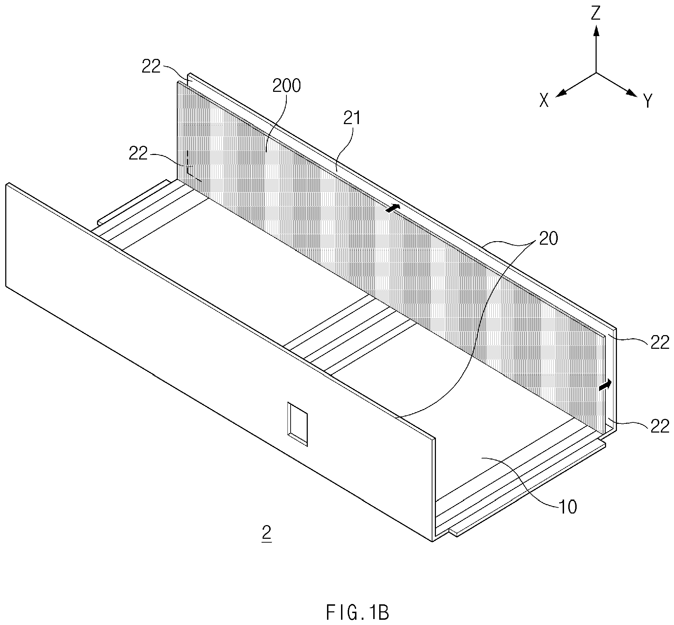

FIG. 1a is a perspective view of a battery module according to an embodiment of the present invention, and FIG. 1b is a perspective view of a frame according to an embodiment of the present invention.

A battery module 1 may include a frame 2. The frame 2 may define an outer periphery of the battery module 1.

The frame 2 may be provided to accommodate a secondary battery. The frame 2 may define the outer periphery of the battery module 1 in a shape surrounding the secondary battery. In other words, the battery module 1 may include the frame 2, and the frame 2 may surround the secondary battery while defining the outer periphery of the battery module.

Referring to FIG. 1, the frame 2 may have a 'U' shape, but is not particularly limited thereto.

The frame 2 may include a bottom part 10. For example, referring to FIG. 1, the bottom part 10 may be disposed on an XY plane. When the secondary battery is accommodated in the frame 2, the bottom part 10 may support the secondary battery.

The frame 2 may include a side part 20. For example, referring to FIG. 1, the side part 20 may be provided to extend in a +Z direction on the XY plane. When the secondary battery is accommodated in the frame 2, an inner surface 21 of the side part 20 may face the secondary battery.

The inner surface 21 may include an edge part 22. The edge part 22 may be defined from an edge end to a predetermined range in addition to the edge end of the inner surface 21. In other words, the edge part 22 may include a portion at which guidelines (e.g., reference numerals 110 and 120) to be described later are disposed.

The bottom part 10 and the side part 20 may define an inner space (or accommodation space) in which the secondary battery are accommodated.

An insulating sheet 200 may be attached to the inner surface 21 of the side part 20. If an error occurs, or the insulating sheet is irregularly disposed whenever the insulating sheet 200 is attached to the edge part 22, an insulation function may be deteriorated, or an interference with other components may occur. Thus, guidelines for accurately attaching the insulating sheet 200 to a predetermined position while minimizing the error may be required when attaching the insulating sheet 200.

The insulating sheet 200 may be attached along the guidelines (e.g., reference numerals 110 and 120) disposed on the edge part 22 to be described in detail later.

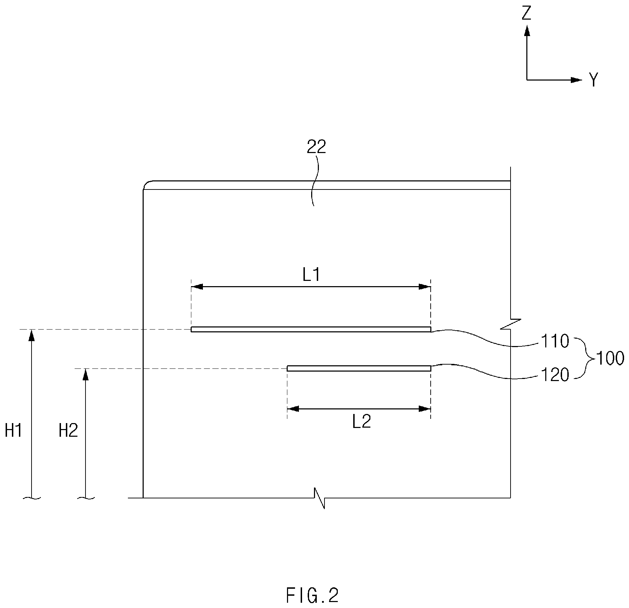

FIG. 2 is an enlarged view of the guidelines according to an embodiment of the present invention.

The frame 2 may include a first guideline 110. The first guideline 110 may be provided to guide the attachment of the insulating sheet 200. For example, the insulating sheet 200 may be attached along the first guideline 110.

The frame 2 may include a second guideline 120. The second guideline 120 may be provided to a second length L2 different from a first length L1 of the first guideline 110.

The first guideline 110 and the second guideline 120 may protrude from the inner surface 21. For example, the first guideline 110 and the second guideline 120 are disposed on the inner surface 21 and may protrude toward the inner space.

The second guideline 120 may be parallel to the first guideline 110.

The second guideline 120 may be disposed at a height different from that of the first guideline 110. For example, the height of the first guideline 110 may be higher than the height of the second guideline. The height may be a height based on the bottom part 10. Referring to FIG. 2, the first height H1 of the first guideline 110 may be higher than the second height H2 of the second guideline 120.

The first guideline 110 and the second guideline 120 may constitute a guide group 100. A plurality of guide groups 100 may be provided on the edge part 22 of the inner surface 21 to which the insulating sheet 200 is attached. For example, the guide groups 100 may be disposed at four portions of the edge part 22 of the inner surface 21, respectively. However, the embodiment of the inventive concept is not limited thereto.

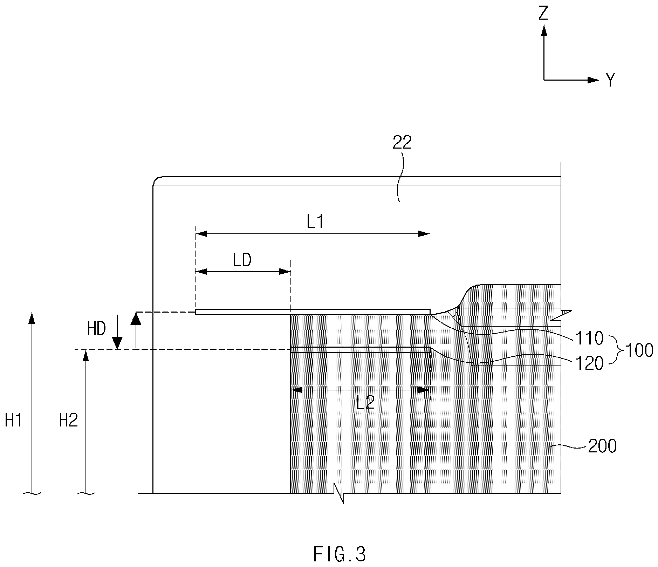

FIG. 3 is an enlarged view illustrating a state in which the insulating sheet is attached based on the guidelines according to an embodiment of the present invention.

The insulating sheet 200 may be attached to the frame 2.

The insulating sheet 200 may be attached so as not to exceed the first height H1 of the first guideline 110. For example, the first guideline 110 may be an upper limit to which the insulating sheet 200 is capable of being attached.

The insulating sheet 200 may be attached along the first guideline 110. For example, the insulating sheet 200 may be attached in a direction in which the first guideline 110 extends.

The attached position of the insulating sheet 200 may be selectively determined by a length difference LD between the first length L1 and the second length L2. For example, the insulating sheet 200 may be attached to a position at which the second guideline 120 is covered and may be attached to cover an end of the first guideline 110 that is further away from an end of the guideline 120 by the length difference LD. In other words, the insulating sheet 200 may be attached in two directions (e.g., +Y direction and -Y direction) along a Y-axis based on the first guideline 110 and the second guideline 120.

The insulating sheet 200 may cover the second guideline 120. For example, the insulating sheet 200 may be attached while covering at least a portion of the second guideline 120. In addition, the insulating sheet 200 may be attached to the inner surface 21 at the second height H2 from the bottom part 10 while covering the second guideline 120. The insulating sheet 200 may be attached to the inner surface 21 at the first height H1 from the bottom part 10 while covering the second guideline 120. In other words, the insulating sheet 200 may be attached in two directions (e.g., +Z direction and -Z direction) along a Z-axis based on the first guideline 110 and the second guideline 120.

As described above, the insulating sheet 200 may be guided in four directions (e.g., +Y direction and Y-axis, and +Z direction and -Z direction) of the two axes (e.g., Y-axis and Z-axis) based on the first guideline 110 and the second guideline 120. Thus, since the insulating member 200 is attached to a predetermined position, insulation performance may be improved, and the insulating member 200 may be attached quickly and effectively.

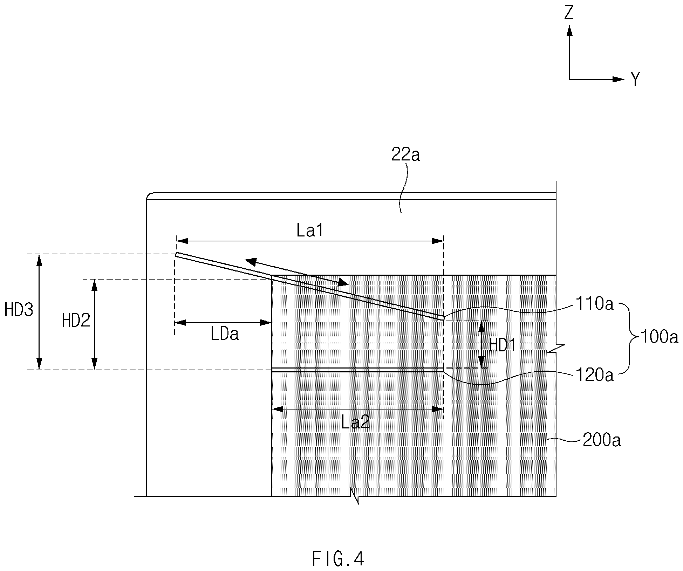

FIG. 4 is an enlarged view illustrating guidelines and a state in which an insulating sheet is attached to the guidelines according to another embodiment of the present invention.

A first guideline 110a may be provided so that a height difference from a second guideline 120a varies in a direction transverse to a height direction. For example, the first guideline 110a may extend in a direction inclined with respect to the height direction (e.g., HD1, HD2, and HD3 directions). Thus, the height difference (e.g., HD1, HD2, HD3) between the first guideline 110a and the second guideline 120a may vary in a predetermined direction (e.g., - Y direction).

An insulating sheet 200a may be attached in an inclined direction in which the first guideline 110a extends.

The insulating sheet 200a may be selectively attached so as to have a length difference LDa in a +Y direction and the -Y direction. In other words, the first guideline 110a and the second guideline 120a may guide the insulating sheet 200a in two directions based on the Y-axis.

The insulating sheet 200a may be selectively attached so as to have a height difference (e.g., HD1, HD2, and HD3) in a +Z direction and a -Z direction. In other words, the first guideline 110a and the second guideline 120a may guide the insulating sheet 200a in two directions based on a Z-axis. In addition, the first guideline 110a and the second guideline 120a may guide the insulating sheet 200a so as to be attached at at least three heights in the Z-axis direction.

As described above, the insulating sheet 200a may be guided in four directions (e.g., +Y direction and -Y-axis and +Z direction and -Z direction) of two axes (e.g., Y-axis and Z-axis) based on the first guideline 110a and the second guideline 120a. In addition, the first guideline 110a and the second guideline 120a may guide the insulating sheet 200a so as to be attached at at least three heights in the Z-axis direction. Thus, since the insulating member 200a is attached to a predetermined position, insulation performance may be improved, and the insulating member 200a may be attached quickly and effectively.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

1: Battery module
2: Frame
10: Bottom part
20: Side part
21: Inner surface
22, 22a: Edge part
100, 100a: Guide group
110, 110a: First guideline
120, 120a: Second guideline
200, 200a: Insulating sheet

## Claims

1. A frame comprising:
a first guideline configured to guide attachment of an insulating sheet; and
a second guideline defining a second length different from a first length of the first guideline at a height different from that of the first guideline.

2. The frame of claim 1, wherein the first guideline and the second guideline are disposed on an inner surface and protrude toward an inner space of the frame.

3. The frame of claim 1, wherein the first height of the first guideline is greater than the second height of the second guideline, and
the first length is greater than the second length.

4. The frame of claim 1, further comprising an insulating sheet attached along the first guideline such that the insulating sheet does not extend beyond the first height.

5. The frame of claim 4, wherein the insulating sheet covers at least a portion of the second guideline.

6. The frame of claim 1, wherein the second guideline is parallel to the first guideline.

7. The frame of claim 1, wherein a difference in height between the first height and the second height is defined in a direction transverse to the first length or the second length.

8. The frame of claim 1, wherein the first guideline and the second guideline constitute a guide group,
wherein the guide group is provided in plurality on an edge part of an inner surface of the frame on which the insulating sheet is configured to be attached.

9. A battery module comprising:
a secondary battery; and
a frame configured to accommodate the secondary battery and define an outer periphery,
wherein the frame comprises:
a first guideline provided to guide attachment of an insulating sheet; and
a second guideline provided to have a second length different from a first length of the first guideline at a height different from that of the first guideline.

10. The battery module of claim 9, wherein the first guideline and the second guideline constitute a guide group,
wherein the guide group is provided in plurality on an edge of the inner surface on which the insulating sheet is capable of being attached.
